# DEMANDE DE BREVET EUROPEEN

(11) **EP 0 884 917 A1**
(43) Date de publication de la demande: **16.12.1998**
(21) Numéro de dépôt: 98401189.0
(22) Date de dépôt: 18.05.1998
(51) Int. Cl.: H04Q 7/32, H04B 7/26

(54) **Procédé destiné à permettre une communication cryptée directe entre deux terminaux de réseau radiomobile et agencements de station et de terminal correspondants.**

(30) Priorité: 21.05.1997 FR 9706180
(71) Demandeur: ALCATEL ALSTHOM COMPAGNIE GENERALE D'ELECTRICITE, 75008 Paris (FR)
(72) Inventeur: Totaro, Antoine, 31600 Muret (FR); Flores, Erick, 31100 Toulouse (FR)
(74) Mandataire: Feray, Valérie

(57) **Abrégé**

Procédé destiné à permettre une communication cryptée, directe en un seul bond ou simplement directe, entre deux terminaux de réseau radiomobile par satellite(s) et/ou de type GSM/DCS, après appel de l'un d'eux par l'intermédiaire d'une station radiomobile fixe (2) d'un réseau.

Après une première phase de cryptage, réalisée de manière habituelle, une clé de chiffrement est simultanément générée par la carte d'identification (0) associée au terminal appelant (1) et par la structure de commande du réseau pour le cryptage/décryptage des données transmises par liaison radio entre ce terminal appelant et la station. Cette clé de chiffrement est alors stockée dans une mémoire de la station, afin d'être transmise au terminal appelé (3), lors de l'établissement d'une liaison radio entre cette station et ce terminal appelé pour la communication demandée par le terminal appelant, en vue de permettre le cryptage/décryptage des données échangées entre terminaux appelé et appelant.

## Description

L'invention a pour objet un procédé destiné à permettre une communication cryptée, directe entre deux terminaux de réseau radiomobile par satelliteis) et/ou de type GSM/DCS, elle concerne également les agencements de station et de terminal radiomobiles correspondants.

Comme il est connu, les communications entre deux terminaux radiomobiles et notamment de terminaux d'un réseau de type GSM sont classiquement établies par l'intermédiaire d'au moins une station radiomobile fixe servant de passerelle qui est éventuellement la même pour les deux terminaux, si ceux-ci sont l'un et l'autre à portée radio convenable de cette station. Dans un tel cas la gestion des ressources radio et le traitement du cryptage et du décryptage sont réalisé par l'intermédiaire de la station desservant les deux terminaux. Il y a une liaison radio établie entre le terminal appelant et la station commune et une liaison radio établie entre cette station et le terminal appelé, le cryptage s'effectue avec une clé de chiffrement, ici référencée Kcl, sur la première citée de ces liaisons et avec une clé de chiffrement, ici référencée Kc2, sur la seconde liaison.

Il est prévu une procédure d'authentification pour chacun des deux terminaux au travers de la station qui leur est alors commune. A cet effet, cette station transmet un nombre aléatoire RAND différent à chaque terminal. La carte d'identification d'abonne, par exemple une carte SIM, insérée dans un terminal exploite le nombre RAND reçu par ce terminal pour calculer un nombre SRES, correspondant à une réponse signée, à l'aide d'une clé secrète d'authentification individuelle Ki et d'un algorithme partagé d'authentification A3 qu'elle stocke avec la clé Ki. La réponse signée SRES fournie par la carte est émise par le terminal comportant cette carte et permet l'identification de l'ensemble formé par le terminal et la carte par le réseau radiomobile. Cette identification est réalisée si la réponse signée SRES émise correspond à la réponse signée SRES simultanément calculée à partir du même nombre RAND au niveau du réseau radiomobile. La carte insérée dans un terminal exploite aussi le nombre RAND que le terminal a reçu et la clé Ki qu'elle stocke pour calculer la clé de chiffrement Kc, soit ici Kcl ou Kc2, au moyen d'un algorithme partagé A8 de détermination de clé qu'elle stocke également. Chaque clé de chiffrement produite par l'intermédiaire d'une carte est prévue pour être exploitée en liaison avec un algorithme partagé de chiffrement A5 pour crypter les données transmises par le terminal qui comporte cette carte et pour décrypter les données reçues par ce terminal en provenance de la station avec laquelle il est en communication.

Il n'est par contre pas actuellement possible d'avoir une communication cryptée directe entre deux terminaux de réseau radiomobile GSM/DCT situés à portée radio, convenable, l'un de l'autre, sans passer par une station, car ces deux terminaux utilisent des clés de chiffrement Kc1 et Kc2 différentes, aucun d'entre eux ne pouvant donc décrypter les émissions de l'autre.

De même dans le cas d'un réseau, radiomobile ou les communications sont établies sous la supervision d'une station de contrôle au sol et transitent par l'intermédiaire d'une ou éventuellement de plusieurs satellites entre les terminaux radiomobiles, il n'est pas actuellement possible d'avoir une communication cryptée directe entre des terminaux, en un seul bond via un ou plusieurs des satellites, pour la raison indiquée ci-dessus.

L'invention propose donc un procédé destiné à permettre une communication cryptée, directe en un seul bond ou simplement directe suivant le réseau, entre deux terminaux de réseau radiomobile par satellite(s) et/ou de type GSM/DCS, après établissement d'un appel par l'un de ces terminaux par l'intermédiaire d'une station radiomobile fixe d'un réseau, en vue d'une communication directe ou directe en seul bond avec l'autre.

Selon une caractéristique de l'invention, au cours d'une première phase de cryptage qui est réalisée de manière habituelle, après authentification de l'abonné appelant par le réseau à partir d'une réponse signée fournie par la carte d'identification individuelle de cet abonné au travers du terminal appelant à laquelle cette carte est associée, à réception d'un nombre aléatoire émis par la station vers ce terminal appelant, une clé de chiffrement est simultanément générée par la carte associée au terminal appelant et par la structure de commande du réseau pour le cryptage/décryptage des données transmises par liaison radio entre ce terminal appelant et la station, ladite clé de chiffrement étant alors stockée dans une mémoire de la station, et en ce que cette clé de chiffrement est ensuite transmise au terminal appelé à partir de la station lors de l'établissement d'une liaison radio entre cette station et ce terminal appelé pour la communication demandée par le terminal appelant, pour le cryptage décryptage des données échangées avec ce terminal appelant.

L'invention propose aussi un agencement de station radiomobile fixe d'un réseau par satellite(s) et/ou de type GSM/DCS pour la mise en oeuvre du procédé selon l'invention.

Selon une caractéristique de l'invention, cet agencement comporte des moyens pour stocker temporairement la clé de chiffrement transmise par une structure de commande du réseau pour les échanges de données entre cette station et un terminal appelant par son intermédiaire et des moyens permettant l'envoi de cette clé de chiffrement par ladite station à un terminal appelé par un terminal appelant de manière à permettre le cryptage/décryptage par chacun de ces terminaux des données émises par l'autre au moyen d'une clé de chiffrement unique, au cours de leur communication en direct et pour la durée de cette communication.

L'invention propose enfin un agencement de terminal radiomobile d'un réseau par satellite(s) et/ou de type GSM/DCS pour la mise en oeuvre du procédé selon l'invention.

Selon une caractéristique de l'invention, cet agencement comporte des moyens lui permettant de stocker, appel par appel, une clé de chiffrement reçue d'une station du réseau radiomobile, lorsqu'il est appelé et des moyens lui permettant d'exploiter cette clé pour crypter/décrypter les données qu'il échange lors d'une communication en direct avec un terminal qui l'a appelé par l'intermédiaire de cette station.

L'invention, ses caractéristiques et ses avantages sont précisés dans la description qui suit en liaison avec les figures évoquées ci-dessous.

La figure 1 présente un schéma de principe relatif au processus de communication envisagé entre deux terminaux de réseau radiomobile.

La figure 2 présente un diagramme relatif à la procédure de cryptage dans un réseau de type GSM pour un terminal appelant.

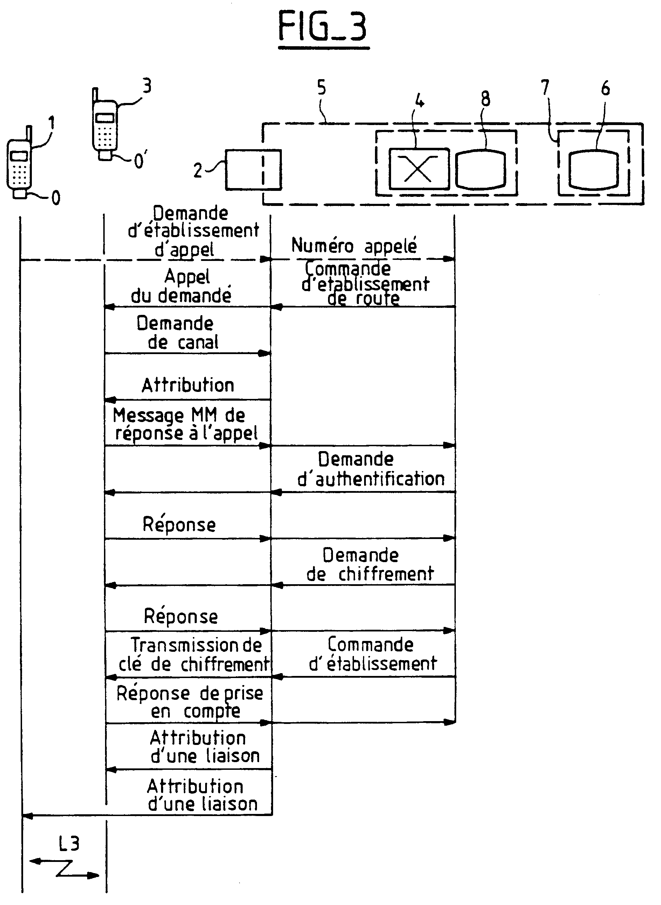

La figure 3 présente un diagramme relatif à l'affectation d'une clé de chiffrement au terminal appelé.

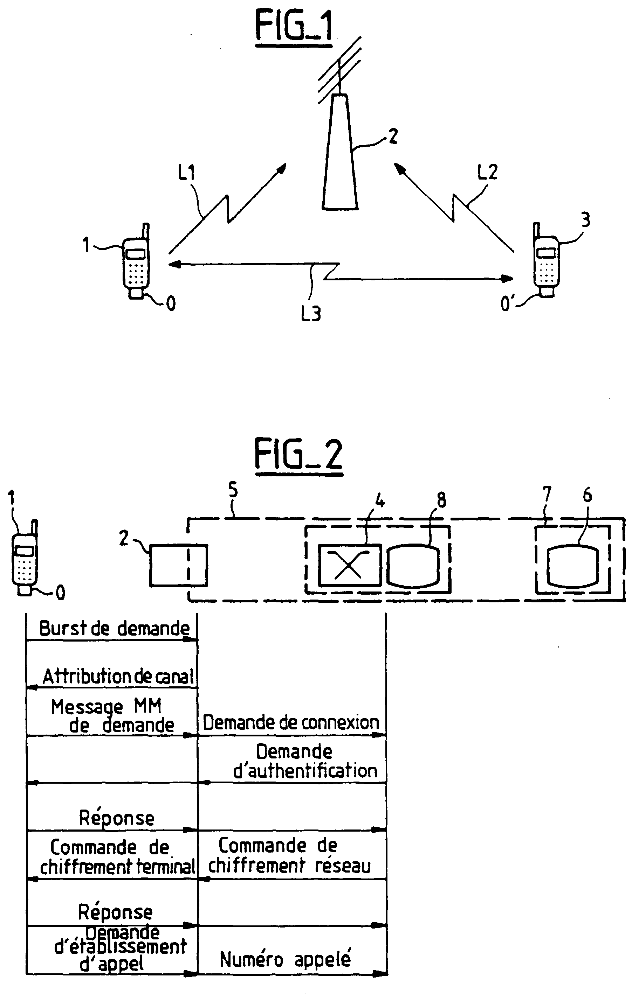

L'établissement d'une liaison radiotéléphonique cryptée directe entre deux terminaux d'un réseau radiomobile par satellite(s) et/ou d'un réseau de type GSM/DCS implique une double opération comme schématisé sur la figure 1.

Dans le cas d'un réseau GSM/DCS usuel, elle suppose que le terminal appelant 1 soit situé a portée radio convenable d'au moins une station radiomobile d'émission-réception 2,, au moment de l'appel, de manière a pouvoir établir une communication bidirectionnelle par une première liaison radio L1 avec cette station dans les conditions requises en la matière.

Dans le cas d'un réseau par satellite(s), il est supposé que le terminal appelant est sous la couverture du système satellite qui lui permet d'établir une liaison bidirectionnelle par une première liaison radio L1 avec une station radiomobile d'émission-réception 2, de type station de contrôle au sol.

En effet, la station 2 est susceptible d'entre du type station de contrôle au sol de réseau radiomobile à satellite(s), ce type de station étant ici désigné par l'acronyme anglais GSC, ou du type sous-système d'émission-réception de réseau radiomobile GSM/DCS. Ce sous-système est alors du type de ceux qui sont couramment désignés par l'acronyme anglais BSS et qui comportent au moins un sous-ensemble radio d'émission réception relié a un réseau ordinairement filaire de communication et un sous-ensemble contrôleur.

L'établissement d'une liaison radiotéléphonique cryptée, directe ou directe en un seul bond telle qu'envisagée ci-dessus, suppose que, suivant le réseau, le terminal appelé 3 soit ou à portée radio de la station 2 ou sous la couverture satellite, au moment de l'appel de manière qu'une communication bidirectionnelle puisse également être établie par la station avec ce terminal appelé au moyen d'une seconde liaison radio, directe ou en un bond. L2. Elle suppose enfin que les deux terminaux soient ou à portée radio convenable l'un de l'autre ou sous la couverture du système satellite, notamment au moment de l'établissement d'une troisième liaison radio L3 directe entre eux en substitution des deux liaisons respectivement établies par chacun de ces terminaux avec la station.

Comme indiqué plus haut, le terminal appelant 1 ne peut entrer en communication par voie radio avec le terminal qu'il appelle qu'au travers du réseau radiomobile. Il émet donc un message de requéte vers ce réseau sur un canal de signalisation après que le numéro appelé lui ait été fourni, par exemple par l'utilisateur au moyen du clavier comporté par ce terminal. Ce message est capté au niveau d'une station 2 du réseau radiomobile à portée radio de laquelle il est alors situé.

Une procédure d'authentification du terminal appelant est alors engagée par le réseau par l'intermédiaire de la station 2 et comme indiqué plus haut.

Si elle se déroule sans anicroche, cette procédure conduit à l'obtention d'une clé de chiffrement Kc1 destinée à permettre tant un chiffrement des données émises par le terminal appelant 1 qu'un déchiffrement des données émises à son intention par la station 2 et ce à l'aide d'un algorithme de chiffrement A5. Cet algorithme est dit partagé dans la mesure où il est classiquement prévu identique pour tous les terminaux d'abonné du réseau radiomobile avec lequel le terminal appelant cherche à communiquer. Comme déjà indiqué plus haut, cet algorithme de chiffrement est prévu stocké dans les cartes d'identification individuelles d'abonné, ici référencées 0 et 0'.

Après authentification, le terminal appelant 1 émet le numéro du terminal à appeler et une phase d'établissement d'appel est effectuée au niveau du réseau radiomobile.

La station 2 effectue une procédure d'appel radio vers le terminal dont le numéro d'appel lui ait été fourni par le terminal appelant 1.

Pour qu'une communication directe cryptée puisse être établie entre le terminal appelant et le terminal appelé, il est nécessaire que la clé de chiffrement Kc soit la même pour ces deux terminaux, étant par ailleurs posé comme hypothèse que tous deux ont a leur disposition le même algorithme de chiffrement A5.

Selon l'invention, il est donc prévu d'assigner au terminal appelé, suite à une première phase d'établissement, la clé de chiffrement Kc1 qui vient d'être attribuée au terminal appelant, toutefois ceci implique que la demande d'établissement d'une communication cryptée directe par un terminal appelant vers un autre terminal soit connue au niveau du réseau radiomobile et ce au moins au niveau de la station 2 par l'intermédiaire de laquelle la demande du terminal appelant est reçue.

La demande d'établissement d'une communication par un terminal appelant, dans un réseau ici supposé de type GSM/DCS, se traduit de manière habituelle par une émission radio par ce terminal d'un burst de demande d'accès comportant notamment un code de demande de service qui dans le cas présent est une demande d'appel sortant. Ce burst est émis sur un canal commun de demande d'accès. La station 2 du réseau radiomobile qui prend en compte cet appel attribue un canal radio de signalisation au terminal appelant pour permettre l'établissement de la communication demandée, le terminal se porte sur ce canal et établit une connexion de niveau 2 par un message de niveau 3 dit de gestion de mobilité et classiquement désigné pur l'acronyme anglais MM, qui dans le cas présent contient une demande de service où sont précisés notamment l'identité du terminal appelant, classiquement sous forme IMSI ou TMSI et le type de service demandé soit ici un appel sortant. A réception de cette demande, la station 2 établit une liaison par canal sémaphore avec un commutateur 4 de réseau fixe, classiquement désigné par l'acronyme anglais MSC, auquel elle est filairement reliée et envoie un message de demande de connexion SCCPCR contenant notamment le message MM évoqué ci-dessus à une structure de commande du reseau 5, aussi dite sous-système d'acheminement NSS, dont fait partie le commutateur 4. Comme il est connu, cette structure de commande comporte notamment un niveau supérieur où se trouve une base centrale de données de localisation générale et de caractérisation d'abonnés 6 physiquement positionnée au niveau d'un centre d'authentification 7, l'une et l'autre étant classiquement désignés par les acronymes anglais HLR et AUC.

Chaque commutateur 4 comporte une sous-structure de commande non représentée par l'intermédiaire de laquelle il communique avec le niveau supérieur de structure de commande évoqué ci-dessus et il est associé à une base de données de localisation précise d'abonnés 8, classiquement désignée par l'acronyme anglais VLR, qui est prévue au niveau de sa sous-structure de commande.

La procédure d'authentification de l'abonne appelant est déclenchee par la structure de commande du réseau 5 à réception d'un message de demande de connexion de type MM et entraine l'envoi d'une réponse d'authentification par le terminal 1 utilisé par cet abonné, selon une procédure qui n'est pas développée ici dans la mesure où classique elle n'a qu'un rapport indirect avec l'objet de la presente invention. Suite à la réussite de la procédure d'authentification, la décision de chiffrement est prise par la structure de commande du réseau 5, classiquement au niveau du sous-ensemble constitué par le commutateur 4 et par la base de données de localisation 8. Un message de commande de passage en mode crypté est alors envoyé à la station 2 à laquelle est alors radioélectriquement relié le terminal appelant, ce message de commande étant couramment transmis selon un protocole d'échange particulier désigné par l'acronyme anglais BSSMAP entre le commutateur et la station. La clé de chiffrement Kc1 destinée à être utilisée par le terminal appelant est alors transmise à la station 2 après avoir été établie au niveau du centre d'authentification 7 du réseau à l'aide de la clé d'authentification d'abonné Ki établie et stockée dans la base 6 pour l'abonné appelant et d'un nombre aléatoire RAND destiné à être fourni pour l'appel en cours à ce terminal appelant par l'intermédiaire de la station 2. La clé de chiffrement Kc1, le nombre aléatoire RAND et un nombre SRES calculé au moyen de l'algorithme A3 à partir des deux précédents, sont transmis sous la forme d'une commande de chiffrement au niveau de la sous-structure de commande localisée au niveau du sous-ensemble constitué par le commutateur 4 et par la base de données de localisation 8. Ce dernier retransmet une commande de chiffrement à la station 2, cette commande comporte la clé de chiffrement Kc1 et un identifiant de l'algorithme A5 à utiliser.

La station 2 stocke ces informations et envoie alors un ordre de passage en mode crypté par voie radio au terminal appelant 1, de manière que l'un et l'autre communiquent dorénavant entre eux en mode crypté.

La description de ces procédures d'authentification est ici fournie à titre indicatif, étant entendu que les procédures évoquées sont conformes aux normes GSM. Une table spécifique T en mémoire de la sous-structure de commande de la station 2 permet de stocker la clé de chiffrement Kc1 fournie pour une communication en cours d'établissement à un terminal appelant.

Le terminal appelant exploite le nombre RAND qu'il a reçu de la station 2 en cours de procédure d'authentification pour obtenir le nombre SRES et la clé de chiffrement Kc1 par l'intermédiaire de la carte 0, dont il est alors équipé. Comme indique plus haut, le nombre SRES est obtenu a l'aide de l'algorithme d'authentification A3 et de la clé d'authentification d'abonné Ki contenu dans la carte alors que la clé de chiffrement est, déterminée au moyen de l'algorithme de détermination de clé A8 également contenu dans cette carte 0.

Une réponse est envoyée par le terminal appelant 1 à la station 2 pour indiquer qu'il est passé en mode crypté et la station en informe la structure de commande du réseau 5 par canal sémaphore. Cette réponse du terminal appelant est suivie d'une demande d'établissement d'appel par l'intermédiaire de laquelle ce terminal communique le numéro d'appel du terminal radiomobile 3 avec lequel il veut communiquer en direct. La station 2 prend connaissance de la demande d'établissement d'appel qu'elle transmet par ailleurs au niveau supérieur de structure de commande situé au niveau du commutateur 4 auquel elle est rattachée. Le numéro d'abonné appelé, par exemple celui désigné par l'acronyme anglais MSISDN, est, d'une part, transmis vers la base centrale de données de localisation générale et de caractérisation d'abonnés 6 pour une vérification de validité réalisée de manière habituelle à ce niveau, et d'autre part, stocké dans la table T en mémoire de la station 2 pour utilisation lors de l'établissement de la communication directe.

La localisation de l'abonné appelé, effectuée au niveau de la base centrale 6 permet de définir la route à établir au travers du réseau pour une communication entre la station 2 desservant le terminal radiomobile appelant 1 et celle qui dessert le terminal radiomobile 3 utilisé par l'abonné appelé, soit la station 2 elle-même dans l'hypothèse envisagée ici.

La procédure de recherche visant à atteindre par voie radio l'abonné appelé est gérée au niveau de la sous-structure de commande du commutateur 4 auquel la station 2 est rattachée. Un message contenant un code d'identification de cet abonné appelé est émis par la station 2 sur un canal radio de diffusion, par exemple un canal tel que désigné par l'acronyme anglais PCH, et/ou une voie balise. Ce code d'identification est par exemple un identificateur international d'abonné TMSI ou un identificateur temporaire d'abonné TMSI au niveau de la station 2. Une réponse par voie radio est attendue de l'abonné appelé via le canal commun d'accès et à partir du terminal 3 où est insérée la carte 0' attribuée à cet abonné, elle déclenche l'attribution d'un canal radio de signalisation à cet abonné par la station 2 et l'établissement d'une connexion de niveau par un message de gestion de mobilité d'une manière analogue à celle décrite au même stade de mise en communication pour le terminal appelant 1. Après une phase d'authentification qui est analogue à celle évoquée à ce stade pour le terminal appelant. Une décision de cryptage de la communication établie entre le terminal 3 et la station 2 est prise au niveau supérieur de la structure de commande du réseau 5 qui envoie une commande de passage de la communication en mode crypté à cette station 2 par l'intermédiaire de la sous-structure de commande située au niveau du sous-ensemble constitué par le commutateur 4 et par la base de données de localisation 8. Là encore ces procédures sont fournies à titre indicatif dans la mesure où elles sont conformes aux normes GSM.

Une clé de chiffrement Kc2, un nombre aléatoire RAND' et un nombre SRES' calculé au moyen de l'algorithme de chiffrement A3 sont alors transmis sous forme d'un triplet à la à la sous-structure de commande du commutateur 4 auquel est associée la station 2. Cette dernière reçoit une commande de chiffrement où est incluse la clé Kc2 et le nombre RAND' et transmet ce dernier au terminal appelé 3 qui en déduit la clé de chiffrement kc2. Une réponse est alors envoyée par le terminal appelé 3 à la station 2 pour indiquer qu'il est passé en mode crypté et celle-ci informe la structure de commande du réseau 5. L'utilisation de cette clé de chiffrement Kc2 permet, conformément aux normes GSM, de crypter la suite de la phase d'établissement entre le terminal appelé et la station 2 et notamment le message transmettant la clé de chiffrement Kc1 au terminal appelé.

La station 2 reçoit alors un message de demande d'établissement de communication avec le terminal appelé qui lui est envoyée par la structure de commande via la sous-structure située au niveau du commutateur 4.

Elle détecte une demande d'établissement d'une communication directe entre un teminal appelant 1 et un terminal appelé 3 reliés à elle l'un et l'autre par voie radio et assure alors la transmission au terminal appelé de la clé de chiffrement Kc1 affectée au terminal appelant 1 qu'elle a stockée dans la table T. Cette clé de chiffrement Kc1 est par exemple transmise dans le message d'établissement d'appel (set up) que la station 2 émet classiquement vers le terminal appelé pour poursuivre la procédure d'établissement jusqu'à son terme c'est-à-dire jusqu'à réponse de ce terminal appelé par prise de la communication, ou "décrochage", après réception d'un signal d'appel correspondant à la classique sonnerie téléphonique.

Dans une variante de réalisation, un message spécifique est émis par la station 2 vers le terminal appelé pour lui transmettre la clé de chiffrement Kc1, après le message d'établissement d'appel alors constitué de manière habituelle et ce à des fins de séparation des procédures.

Dans l'un et l'autre cas, le terminal appelé indique qu'il a pris en compte le message spécifique qu'il a reçu, la station 2 et chacun des deux terminaux exploitent alors la seule clé de chiffrement Kc1 pour toutes les opérations de chiffrement et de déchiffrement qu'ils réalisent dans le cadre de leurs communications.

## Revendications

1. Procédé destiné à permettre une communication cryptée, directe en un seul bond ou simplement directe, entre deux terminaux de réseau radiomobile par satellite(s) et/ou de type GSM/DCS, après établissement d'un appel par l'un d'eux par l'intermédiaire d'une station radiomobile fixe d'un réseau, caractérisé en ce qu'au cours d'une première phase de cryptage qui est réalisée de manière habituelle, après authentification de l'abonné appelant par le réseau à partir d'une réponse signée (SRES) fournie par la carte d'identification individuelle de cet abonné au travers du terminal appelant à laquelle cette carte est associée, à réception d'un nombre aléatoire (RAND) émis par la station vers ce terminal appelant, une clé de chiffrement (Kc1) est simultanément générée par la carte associée au terminal appelant et par la structure de commande du réseau pour le cryptage décryptage des données transmises par liaison radio entre ce terminal appelant et la station, ladite clé de chiffrement étant alors stockée dans une mémoire de la station, et en ce que cette clé de chiffrement est ensuite transmise au terminal appelé à partir de la station lors de l'établissement d'une liaison radio entre cette station et ce terminal appelé pour la communication demandée par le terminal appelant, pour le cryptage/décryptage des données échangées avec ce terminal appelant.

2. Procédé selon la revendication 1, caractérisé en ce que la clé de chiffrement (Kc1) est incluse dans le message d'établissement d'appel (set up) que la station émet à destination du terminal appelé, lors de l'établissement d'une liaison radio avec ce terminal appelé.

3. Procédé selon la revendication 1, caractérisé en ce que la clé de chiffrement (Kc1) est transmise dans un message spécifique transmis par la station séparément du message d'établissement d'appel qu'émet cette station à destination du terminal appelé, lors de l'établissement d'une liaison radio avec ce terminal appelé.

4. Agencement de station radiomobile fixe d'un réseau par satellite(s) et/ou de type GSM/DCS pour la mise en oeuvre du procédé selon l'une des revendications 1, 2, 3, caractérisé en ce qu'il comporte des moyens pour stocker temporairement la clé de chiffrement transmise par une structure de commande du réseau pour les échanges de données entre cette station et un terminal appelant par son intermédiaire et des moyens permettant l'envoi de cette clé de chiffrement par !adite station à un terminal appelé par un terminal appelant de manière à permettre le cryptage/décryptage par chacun de ces terminaux des données émises par l'autre au moyen d'une clé de chiffrement unique, au cours de leur communication en direct et pour la durée de cette communication.

5. Agencement de terminal radiomobile d'un réseau par satellite(s) et/ou de type GSM/DCS pour la mise en oeuvre du procédé selon l'une des revendications 1, 2, 3, caractérisé en ce qu'il comporte des moyens lui permettant de stocker, appel par appel, une clé de chiffrement reçue d'une station du réseau radiomobile. lorsqu'il est appelé et des moyens lui permettant d'exploiter cette clé pour crypter/décrypter les données qu'il échange lors d'une communication en direct avec un terminal qui l'a appelé par l'intermédiaire de cette station.
